(19) Europäisches Patentamt
European Patent Office
Office européen des brevets

(11) EP 1 775 683 A1

(12) EUROPEAN PATENT APPLICATION
published in accordance with Art. 158(3) EPC

(43) Date of publication:
18.04.2007 Bulletin 2007/16

(51) Int Cl.:
G06T 7/00 (2006.01)    G06T 1/00 (2006.01)

(21) Application number: 05768665.1

(22) Date of filing: 28.07.2005

(86) International application number:
PCT/JP2005/014271

(87) International publication number:
WO 2006/013913 (09.02.2006 Gazette 2006/06)

(84) Designated Contracting States:
DE FR GB

(30) Priority: 04.08.2004 JP 2004227567

(71) Applicant: SEIKO EPSON CORPORATION
Shinjuku-ku
Tokyo 163-0811 (JP)

(72) Inventors:
• NAGAHASHI, Toshinori,
c/o SEIKO EPSON CORPORATION
Suwa-shi, Nagano 392-8502 (JP)

• HYUGA, Takashi,
c/o SEIKO EPSON CORPORATION
Suwa-shi, Nagano 392-8502 (JP)

(74) Representative: HOFFMANN EITLE
Patent- und Rechtsanwälte
Arabellastrasse 4
81925 München (DE)

(54) OBJECT IMAGE DETECTION DEVICE, FACE IMAGE DETECTION PROGRAM, AND FACE IMAGE DETECTION METHOD

(57) An object image detecting apparatus for determining whether or not an object image exists in a detection target image in which whether the object image is contained is not known includes: an image reading unit for reading a predetermined region of the detection target image as a detection target region; a feature vector producing unit for dividing an image included in the detection target region resized to a predetermined size into a plurality of blocks, calculating a representative value of an image feature amount indicating a predetermined image feature for each of the divided blocks, and producing a feature vector showing a characteristic of the image feature within the detection target region by referring to the representative value; and at least two classifying units for determining whether or not the obj ect image exists in the detection target region by different references based on the image feature indicated by the feature vector.

FIG. 1

**Description**

Technical Field

The present invention relates to a technology of pattern recognition and object recognition, and to an object image detecting apparatus, a face image detecting program and a face image detecting method for determining whether an object such as a human face is included in an image.

Background art

As a method of identifying an object such as a human face in a detection target image in which whether or not such an object is included is not known, a template showing an average human face has been used to determine how the detection target image is matched with the template, and a face image has been detected based on this determination as disclosed in Japanese Patent Application Publication 2003-271933, for example.

In such a related-art method using a template, however, it is possible not to detect a face image when the direction of the face is varied. If the basis for the template is widened to prevent such detection omission, an image other than a face may be erroneously detected as a face image.

Disclosure of invention

In order to solve the above problems, an object image detecting apparatus according to a first aspect of the invention for determining whether or not an object image exists in a detection target image in which whether the object image is contained is not known includes: an image reading unit for reading a predetermined region of the detection target image as a detection target region; a feature vector producing unit for dividing an image included in the detection target region resized to a predetermined size into a plurality of blocks, calculating a representative value of an image feature amount indicating a predetermined image feature for each of the divided blocks, and producing a feature vector showing a characteristic of the image feature within the detection target region by referring to the representative value; and at least two classifying units for determining whether or not the object image exists in the detection target region by different references based on the image feature indicated by the feature vector.

In this structure, the feature vector showing the image feature amount in the detection target region is produced from the representative value of the image feature amount in the detection target region having been divided into the plural blocks, and is inputted to the two or more classifying units which perform classification by the different references. Since it is determined whether the detection target region includes the object image by the two or more different references, the object image detecting apparatus according to the first aspect of the invention can detect the object image within the detection target region with high reliability regardless of the direction of the object.

It is preferable that the object image detecting apparatus according to the first aspect of the invention further includes a classifying unit selecting section for selecting the classifying units in accordance with a statistical characteristic of the image feature indicated by the feature vector.

In this structure, the classifying units are selected in accordance with the statistical characteristic of the image feature indicated by the feature vector. Since the appropriate classifying unit can be selected, the object detection accuracy and processing speed can be increased.

It is preferable that the feature vector producing unit in the object image detecting apparatus according the first aspect of the invention includes: a resizing section for resizing the image within the detection target region to a predetermined size; an image feature calculating section for calculating numerical values of the predetermined image feature of the image; and an average/ variance calculating section for dividing the detection target region into a plurality of blocks and calculating an average or a variance of the numerical values for each of the divided blocks.

In this structure, the image in the detection target region which has been resized to the predetermined size is divided into a plurality of blocks, and the feature vector is calculated from the feature value represented by the average or variance for each block. Since the feature value for each block is securely obtained and the calculation volume for acquiring the feature vector is greatly decreased, the feature vector can be calculated with high precision at high speed.

It is preferable that the image feature calculating section in the object image detecting apparatus according to the first aspect of the invention includes a luminance calculating section for calculating a luminance of each pixel constituting the image within the detection target region.

It is also preferable that the image feature calculating section in the object image detecting apparatus according to the first aspect of the invention includes an edge intensity calculating section for calculating edge intensity within the detection target region.

In this structure, the object image can be recognized with high accuracy at high speed when the object image exists in the detection target region.

It is preferable that the edge intensity is calculated using a Sobel operator provided for each pixel constituting the image within the detection target region in the object image detecting apparatus according to the first aspect of the invention.

In this structure, the edge intensity can be calculated with high accuracy.

It is preferable that the classifying units in the obj ect image detecting apparatus according to the first aspect of the invention include support vector machines which have learned a plurality of sample object images and sample non-object images for learning in advance.

In this structure, it can be determined at high speed with high accuracy whether or not the object image exists in the detection target region.

It is preferable that the classifying units in the obj ect image detecting apparatus according to the first aspect of the invention include a classifier for a first process and a classifier for a second process. The classifier for the first process can perform classification at higher speed than that of the classifier for the second process. The classifier for the second process can perform classification with higher accuracy than that of the classifier for the first process.

It is also preferable that the classifier for the second process in the object image detecting apparatus according to the first aspect of the invention classifies the feature vectors which can be classified by the classifier for the first process.

In this structure, since the high-speed classifier and the high-accuracy classifier are combined in the classification processing, the classification can be efficiently performed.

It is preferable that the classifier for the first process in the object image detecting apparatus according to the first aspect of the invention uses a linear Kernel function as a classifying function of the support vector machine.

It is also preferable that the classifier for the second process in the object image detecting apparatus according to the first aspect of the invention uses a non-linear Kernel function as a classifying function of the support vector machine.

In this structure, calculations for the classification are performed using the Kernel function. Since the calculations are simplified and the calculation volume is reduced, the classification can be carried out at high speed.

It is preferable that the classifiers in the object image detecting apparatus according to the first aspect of the invention include one classifier and the other classifier disposed downstream from the one classifier such that the respective classifiers can perform classification based on different image features.

In this structure, since the respective classifiers successively perform classification based on the different image features, classification with high accuracy can be achieved.

It is preferable that the other classifier in the obj ect image detecting apparatus according to the first aspect of the invention includes a support vector machine which has learned the object images for learning and the non-object images having been erroneously classified by the one classifier.

In this structure, the other classifier can effectively learn the images without erroneously classifying again the images which have been erroneously classified by the one classifier.

Additionally, by adopting a face image as the object image, a face image detecting apparatus capable of detecting a face image at high speed with high reliability can be provided.

A second aspect of the invention is a face image detecting program for determining whether or not a face image exists in a detection target image in which whether the face image is included or not is not known. Under the face image detecting program, a computer functions as: an image reading unit for reading a predetermined region of the detection target image as a detection target region; a feature vector producing unit for dividing an image included in the detection target region resized to a predetermined size into a plurality of blocks, calculating a representative value of an image feature amount indicating a predetermined image feature for each of the divided blocks, and producing a feature vector showing a characteristic of the image feature within the detection target region by referring to the representative value; and at least two classifying units for determining whether or not the object image exists in the detection target region by different references based on the image feature indicated by the feature vector.

This program offers similar advantages to those provided by the object image detecting apparatus according to the first aspect of the invention.

A face image detecting method according to a third aspect of the invention for determining whether or not a face image exists in a detection target image in which whether the face image is included or not is not known includes: designating a predetermined region within the detection target image as a detection target region; resizing an image within the detection target region to a predetermined size; dividing the detection target region into a plurality of blocks; calculating a representative value of an image feature amount included in each of the blocks; producing a feature vector showing a characteristic of the image within the detection target region from the representative value of the image feature amount; and inputting the feature vector to at least two classifiers having different references for classification to determine whether or not the face image exists within the detection target region.

This method offers similar advantages to those provided by the object image detecting apparatus according to the first aspect of the invention.

BRIEF DESCRIPTION OF THE DRAWINGS

The invention will be described with reference to the accompanying drawings, wherein like numerals refer to like elements, and wherein:

Fig. 1 is a block diagram showing a face image detecting apparatus in an embodiment according to the invention;

Fig. 2 illustrates a structure of hardware included in the face image detecting apparatus;

Fig. 3 schematically shows a structure of SVMs (Support Vector Machines) in the embodiment;

Fig. 4 illustrates a learning method for the SVMs;

Fig. 5 is a flowchart showing an example of a face image detecting method used for an image to be searched;

Fig. 6 is a flowchart showing how an image feature vector is produced;

Figs. 7A and 7B illustrate a filter shape of Sobel; and

Fig. 8 illustrates blocks formed in a detection target region.

DESCRIPTION OF THE EMBODIMENT

Described below is a face image detecting apparatus for detecting a human face image as an example of an object image detecting apparatus in an embodiment according to the invention.

(A. Structure of Apparatus)

A preferred embodiment according to the invention is hereinafter described in detail with reference to the appended drawings.

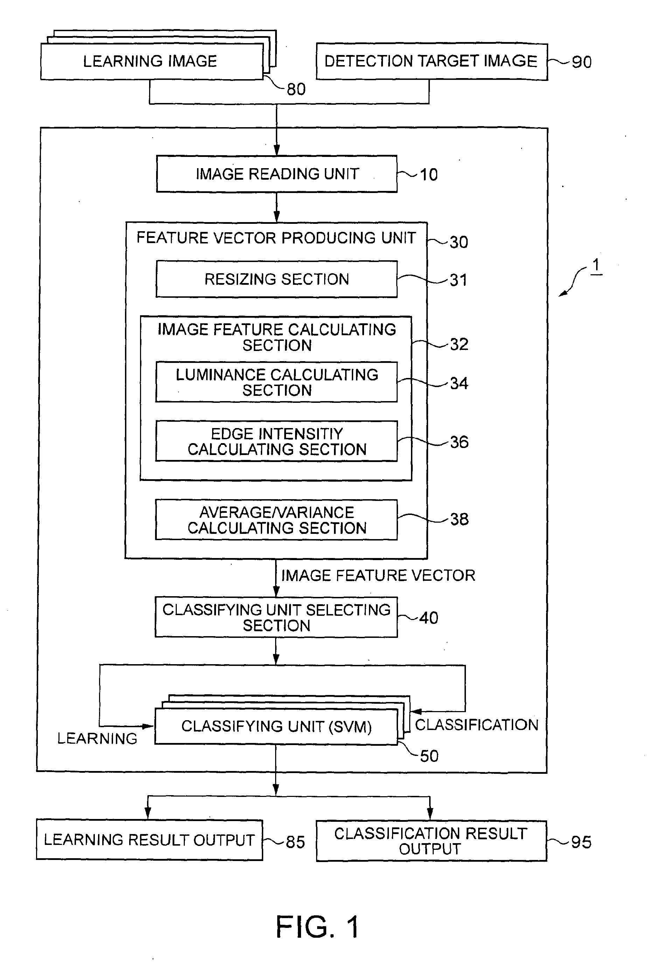

Fig. 1 is a block diagram showing a face image detecting apparatus 1 in an embodiment according to the invention. As illustrated in the figure, the face image detecting apparatus 1 chiefly includes: an image reading unit 10 for reading learning images 80 as sample images for learning and a detection target image 90; a feature vector producing unit 30 for producing feature vectors of an image which is divided into a plurality of blocks; SVMs (Support Vector Machines) as a plurality of classifying units 50 to which the feature vectors are inputted to determine whether or not the detection target image 90 corresponds to a prospective face image region; and a classifying unit selecting section 40 for selecting the SVM 50 appropriate for performing classification from the plural SVMs 50.

Specifically, the image reading unit 10 is formed by a CCD (Charge Coupled Device) camera such as a digital still camera and a digital video camera, a vidicon camera, an image scanner or the like, and has a function of performing A/D conversion of a predetermined region within the read detection target image 90 and a plurality of face images and non-face images as the learning images 80, and transmitting the digital data thus obtained to the feature vector producing unit 30.

The feature vector producing unit 30 includes: a resizing section 31 for resizing the image read by the image reading unit 10 to a predetermined size; an image feature calculating section 32 for calculating numerical values of an image feature of the resized image; and an average/variance calculating section 38 for dividing a pixel region into a plurality of blocks having a predetermined size and calculating an average or variance of the numerical values. The image feature calculating section 32 has a luminance calculating section 34 for calculating luminance of an image, and an edge intensity calculating section 36 for calculating edge intensity of an image. Respective image feature vectors showing image features of the detection target image 90 and the learning images 80 are produced by those sections included in the feature vector producing unit 30, and are sequentially sent to the classifying unit selecting section 40.

In the above sections, the resizing section 31 resizes the sizes of the detection target image 90 and the learning images 80 to a predetermined size (e. g. 24 × 24 pixels). The resizing method employed herein may be an interpolating method between image pixels such as a bi-linear method and a bi-cubic method. Other sections included in the feature vector producing unit 30 will be discussed in detail later.

The classifying unit selecting section 40 selects the appropriate SVM 50 from the plural SVMs 50 based on the statistical characteristic of the image feature indicated by the image feature vector produced by the feature vector producing unit 30. The process performed to select the SVM 50 will be explained later.

The SVM 50 learns a number of face images and non-face images from the learning images 80, and judges whether or not a predetermined region within the detection target image 90 produced by the feature vector producing unit 30 includes a face image according to the results of learning.

The SVM 50 employed in the invention is now described in detail. The SVM 50 has been proposed by V. Vapnik of AT&T within a frame of a statistic learning theory in 1995. The SVM 50 is a learning machine capable of obtaining an optimum hyperplane for linearly separating all input data having two classes using indexes called "margins", and is known as one of the most excellent learning models in pattern recognition capability. It is also known that the SVM 50 offers high recognition capability by utilizing a technique called "Kernel trick" even when linear separation is impossible.

The SVM 50 used in this embodiment has the following two steps:

(1) learning step
(2) recognition step

In (1) learning step, the learning images 80 constituted by a number of face images and non-face images as learning samples shown in Fig. 1 are read by the image reading unit 10. Then, feature vectors of the resized learning images 80 are produced by the feature vector producing unit 30 so as to be learned as the image feature vectors.

In (2) recognition step, predetermined regions within the detection target image 90 are sequentially read out. Then, image feature vectors of the resized regions are produced by the feature vector producing unit 30, and are inputted as feature vectors. Subsequently, it is judged whether or not the inputted image feature vectors correspond to either region with respect to the classifying hyperplane, thereby determining whether or not a face image exists in the regions of the detection target image 90 with high probability according to this judgment.

The SVM 50 is herein discussed in more detail based on the description in Statistics for Pattern Recognition and Learning (Patan Ninshiki To Gakushu No Tokeigaku) , pp. 107-118 (co-authors: Hideki Aso, Hiroji Tsuda and Noboru Murata, published by Iwanami-shoten). When a problem to be classified is non-linear, the SVM 50 can utilize a non-linear Kernel function. The classifying function used in this case can be represented by the formula shown below. When the value of the classifying function is zero, it corresponds to the classifying hyperplane. When the resultant value is other than zero, it corresponds to a distance from the classifying hyperplane calculated from the given image feature vector. Also, the non-negative result obtained from the classifying function indicates a face image, while negative result obtained therefrom represents a non-face image.

[Formula 1]

$$f((\phi(x)) = \sum_{i=1}^{n} \alpha_i y_i K(x, x_i) + b$$

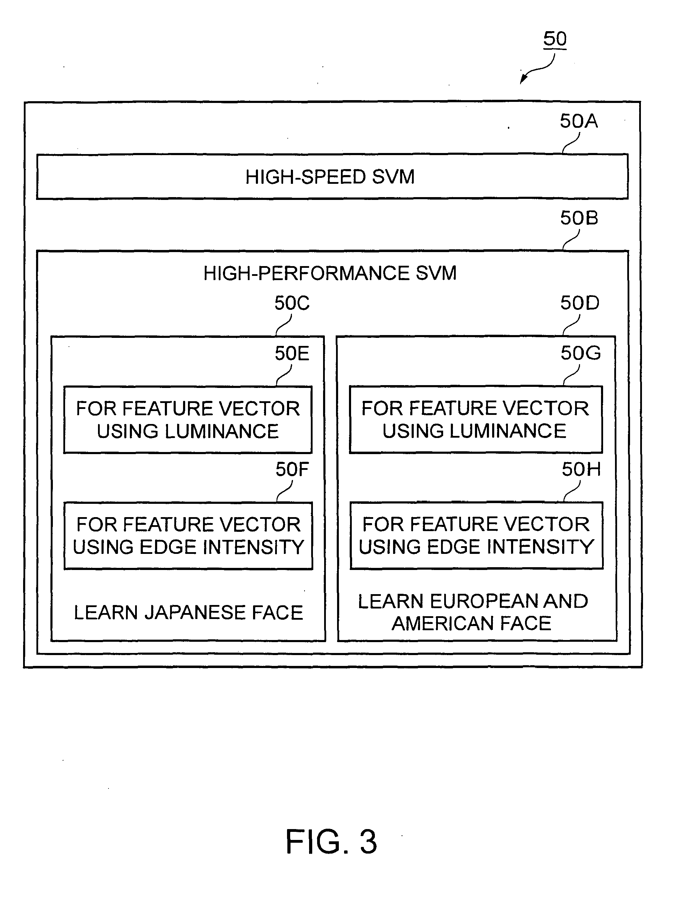

In the above formula, x is a feature vector and xi is a support vector, both of which use a value produced by the feature vector producing unit 30. K represents a Kernel function for which a polynomial or a Gaussian function is generally used. In this embodiment, a linear function is employed for a high-speed SVM (50A, Fig. 3) which processes at high speed, while an RBF function as a non-linear function is used for a high-performance SVM (50B, Fig. 3). The respective classification features of the plural SVMs 50 in this embodiment will be described later.

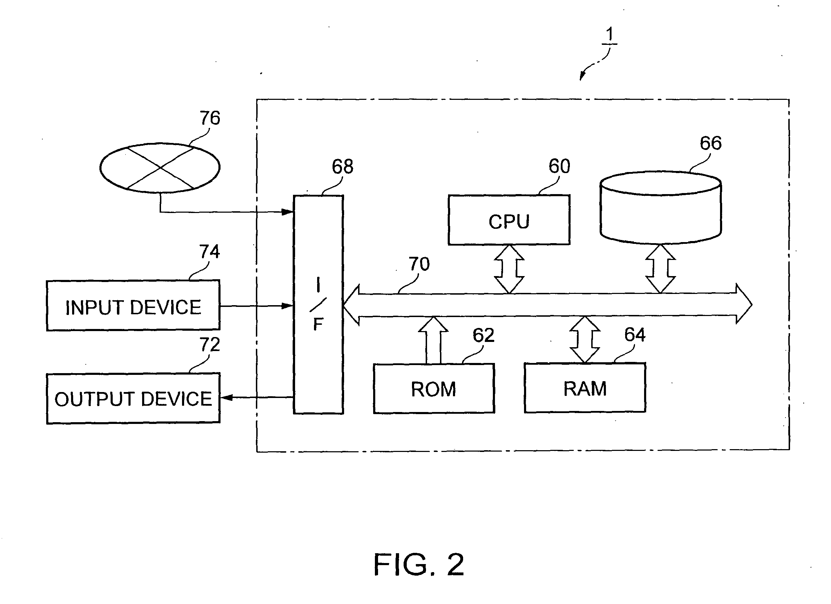

Fig. 2 illustrates a structure of hardware included in the face image detecting apparatus 1. As illustrated in this figure, the face image detecting apparatus 1 includes: a CPU (Central Processing Unit) 60 for prosecuting various controls and calculations; a RAM (Random Access Memory) 64 used as a main storage; a ROM (Read Only Memory) 62 as a storage for reading only; a secondary storage 66 such as a hard disc drive (HDD), a semiconductor memory and the like; an output device 72 having a monitor such as an LCD (Liquid Crystal Display) and a CRT (Cathode Ray Tube) and the like; an input device 74 having an image scanner, a keyboard, a mouse, an image pickup sensor such as a CCD (Charge Coupled Device) and a CMOS (Complementary Metal Oxide Semiconductor), and the like; and various types of busses 70 for connecting these devices and an input/output interface (I/F) 68 such as processor busses, memory busses, system busses, and input/output busses formed by PCI (Peripheral Component Interconnect) busses, ISA (Industrial Standard Architecture) busses, USB (Uni versal Serial Bus) busses or the like.

Various types of controlling programs and data supplied using a storage medium such as a CD-ROM and a DVD-ROM or a communication network 76 (LAN, WAN, the Internet and the like) are stored in the secondary storage 66 or the like. The programs and data are loaded into the RAM 64 as necessary. The CPU 60 executes predetermined controls and calculations using various resources under the programs loaded in the RAM 64 to output the process results (process data) to the output device 72 via the buses 70 for display. The CPU 60 also appropriately stores (renews) the data in the database formed by the secondary storage 66 as necessary.

In reality, the respective functions of the image reading unit 10, the feature vector producing unit 30, the classifying unit selecting section 40, the SVMs 50 and others included in the face image detecting apparatus 1 are performed by the hardware resources such as the CPU 60 and the RAM 64 and the software stored in the ROM 62 and the secondary storage 66 organically cooperating with each other.

Next, the classification features of the SVMs 50 are explained. Fig. 3 schematically illustrates a structure of the SVM 50 in this embodiment. The plural SVMs 50 included in the face image detecting apparatus 1 can be roughly classified into two types of classification features: one type is the high-speed SVM 50A which does not necessarily have high performance of generalization showing estimation capability but can execute high-speed classification; and the other type is the high-performance SVM 50B which performs classification at lower speed than the high-speed SVM 50A but has high performance of generalization to achieve highly accurate classification. The high-performance SVM 50B can deal with various image features indicated by image feature vectors. For example, a luminance SVM (50E, 50G) to deal with an image feature vector produced using a luminance value of each pixel in an image, an edge intensity SVM (50F, 50H) to deal with an image feature vector produced using edge intensity of an image, and other types of SVMs are used.

Additionally, concerning the high-performance SVM 50B, the SVM 50 can be specialized by utilizing a statistical nature of an image feature amount. For detection of human face images, a Japanese face SVM 50C having learned Japanese faces as sample images and a European and American face SVM 50D having learned European and American faces as sample images are prepared, for example. The statistical nature of the image feature amount in this case is obtained by the following procedures.

    (1) Face images are divided into groups according to racial or visual features.

(2) An image feature amount of an average face image in each group of the face images is calculated.
(3) Euclidean distances of the learning images 80 and the detection target image 90 from the average face images in the respective groups are obtained. Then, the group having the minimum distance from each of the learning images 80 and the detection target image 90 is determined, to which group the corresponding learning image 80 or detection target image 90 belongs.

The appropriate SVM 50 is selected by the classifying unit selecting section 40 in accordance with the process steps and hierarchies. The classifying unit selecting section 40 selects not only the single SVM 50, but also a plurality of the SVMs 50 to perform multistage classification. For example, the following combinations can be adopted as the multistage selection patterns:

(1) in-series pattern having high-speed process and high-accuracy process
(2) in-series pattern having processes for different image features
(3) in-parallel pattern using SVMs specialized by utilizing statistical natures of image feature amounts

In "(1) in-series pattern having high-speed process and high-accuracy process", the high-speed SVM 50A is selected for the first process of the face image selection, for example. The high-speed SVM 50A executes classification with low accuracy. Then, the high-performance SVM 50B is selected for the second process. The high-performance SVM 50B classifies the images having been classified by the high-speed SVM 50A with high accuracy.

In "(2) in-series pattern having processes for different image features", the luminance SVM 50E is selected from the high-performance SVMs 50 for the first process, for example, and the luminance SVM 50E classifies a face image. Then, the edge intensity SVM 50F is selected for the second process, and the edge intensity SVM 50F further classifies the image having been classified by the luminance SVM 50E with higher accuracy.

In "(3) in-parallel pattern using SVMs specialized by utilizing statistical natures of image feature amounts, a plurality of the SVMs 50 specified by utilizing the statistical natures of face image feature amounts are prepared, and the SVMs 50 appropriate for the process are selected in accordance with the statistical natures of the face images to be classified.

It is also possible to execute more complex processing using the SVMs 50 by combining the above patterns.

(B. Leaning method for SVM)

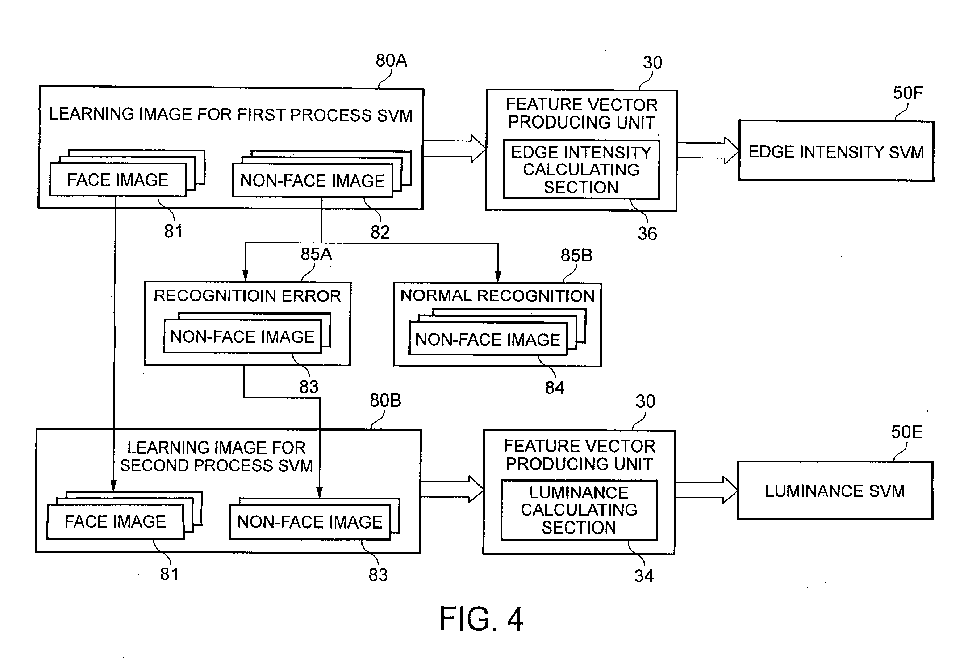

Next, the learning method for the SVM 50 is discussed. Fig. 4 illustrates the learning method for the SVM 50. In this figure, "(2) in-series pattern having processes for different image features" is adopted as the combination of SVMs 50. More specifically, the edge intensity SVM 50F for the first process and the luminance SVM 50E for the second process are selected from the high-performance SVM 50B. While the Japanese face SVM 50C, which has learned Japanese faces as sample images, is herein selected from the high-performance SVM 50B, the European and American face SVM 50D, which has learned European and American faces as sample images, can learn by a similar method.

In the learning method, the edge intensity SVM 50F in the Japanese face SVM 50C is initially selected for the first process of learning. More specifically, one image of either face images 81 or non-face images 82 in learning images 80A is selected for the SVM for the first process, and the selected image is resized by the resizing section 31 of the feature vector producing unit 30. Then, the edge intensity of the resized image is calculated by the edge intensity calculating section 36 to produce a feature vector having the calculated edge intensity as an image feature. Subsequently, the produced feature vector is inputted to the edge intensity SVM 50F so that the edge intensity SVM 50F can learn the feature vector. By repeating these learning steps for a number of the face images 81 and non-face images 82, the estimation capability of the edge intensity SVM 50F can be enhanced.

Next, the non-face images 82 used in the learning steps of the edge intensity SVM 50F are classified into a group 85B where the non-face images 82 have been normally recognized and a group 85A where the non-face images 82 have been erroneously recognized. Non-face images 83 in the erroneous group 85A are used as learning images 80B for the SVM for the second process. The face images 81 in the learning images 80A for the SVM for the first process are used as the face images 81 in learning images 80B for the SVM for the second process.

Then, the second process of learning is performed using the luminance SVM 50E in the Japanese face SVM 50C. More specifically, one image of either the face images 81 or the non-face images 83 is selected from the learning images 80B for the SVM for the second process, and the selected image is resized by the resizing section 31 of the feature vector producing unit 30. Subsequently, the luminance of the resized image is calculated by the luminance calculating section 34 to produce a feature vector having the calculated luminance as an image feature. Thereafter, the produced feature vector is inputted to the luminance SVM 50E so that the luminance SVM 50E can learn the feature vector. By repeating these learning steps for a number of the face images 81 and non-face images 83, the estimation capability of the luminance SVM 50E can be enhanced.

(C. Flow of Classification by SVM)

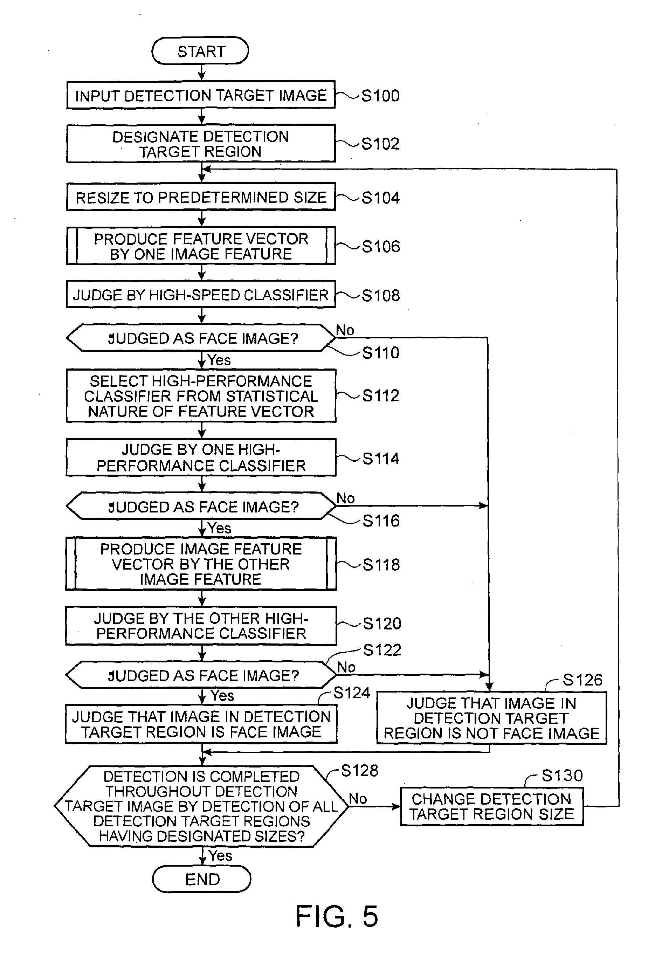

Described next is an example of the face image detecting method using the face image detecting apparatus 1 to which the above structure is applied. Fig. 5 is a flowchart showing an example of the face image detecting method for detecting a face image in an actual detection target image. Before starting classification using the actual detection target image, it is necessary to finish the learning steps described above so that the SVMs 50 used for classification can learn face images and the non-face images as sample images for learning.

In the learning steps, a feature vector corresponding to each face image and non-face image as a sample image is produced and inputted with the information which of a face image and a non-face image the feature vector belongs to, as in the known learning steps. It is preferable that the learning images used for learning are processed in the same manner as the region of the actual detection target image is processed. More specifically, since an image region to be classified according to the invention has been dimensionally compressed, images having been compressed until the same dimension in advance are used to perform classification at higher speed with higher accuracy.

In the face image detecting apparatus 1, the SVMs 50 first execute classification of " (1) in-series pattern having high-speed process and high-accuracy process", and then carry out " (3) in-parallel pattern using SVMs specialized by utilizing statistical natures of image feature amounts". In each SVM of the in-parallel pattern, "(2) in-series pattern having processes for different image features" is combined, thereby performing complex classification.

Upon start of operation, the face image detecting apparatus 1 carries out a step for inputting a detection target image. More specifically, the face image detecting apparatus 1 inputs the detection target image 90 as a target of face detection from the input device 74 using the image reading unit 10 (step S100).

Then, the face image detecting apparatus 1 designates a region as a detection target within the detection target image. The method of determining the detection target region is not specifically limited, but may be a region obtained by another face image classifying unit or a region which is arbitrarily designated within the detection target image by a user of the apparatus of the invention or others. In most cases, it is not known in principle whether or not the face image is included in the detection target image as well as where the face image is included in the detection target image prior to face image detection. Thus, in selecting detection regions, it is preferable that the detection starts from a certain region including, for example, the upper left corner of the detection target image as a starting point, sequentially shifting by a certain amount of pixels in the horizontal and vertical directions to search for the face image throughout the regions. The regions are not required to have a fixed size, but the sizes of the regions to be selected may be appropriately varied (step S102).

Then, the face image detecting apparatus 1 resizes the initial detection target region by the resizing section 31 to a predetermined size, e.g., 24 × 24 pixels. Since it is not known in principle what size the face image is as well as whether or not the face image is included in the detection target image, the number of pixels included in the face image considerably differs depending on the size of the face image in the selected region. Thus, it is necessary to resize the selected region to a reference size (24 × 24 pixels) (step S104).

Subsequently, the face image detecting apparatus 1 produces an image feature vector by means of the feature vector producing unit 30 referring to the edge intensity of the image as one of the image features. The production method of the image feature vector will be discussed later (step S106).

Thereafter, the face image detecting apparatus 1 inputs the image feature vector to the high-speed SVM 50A which has been selected by the classifying unit selecting section 40, and judges whether or not the face image exists in the initial detection target region (step S108).

When it is determined that the face image does not exist ("NO" in step S110), the flow goes to a step judging that the image in the initial detection target region is a non-face image (step S126).

On the other hand, when it is determined that the face image exists ("YES" in step S110), the flow proceeds to the next step (step S112).

Next, the face image detecting apparatus 1 selects either one of the high-performance SVMs (50C, 50D), which are specialized by utilizing the statistical natures of the face image feature amounts, by the classifying unit selecting section 40 (step S112). Since the following steps are similar when either of the SVMs 50C and 50D is selected, it is assumed that the Japanese face SVM 50C having learned the Japanese faces is selected in this step for the convenience of explanation.

Then, the face image detecting apparatus 1 inputs the image feature vector produced using the edge intensity of the image to the edge intensity SVM 50F, and judges whether or not the face image exists in the initial detection target region (step S114).

When it is determined that the face image does not exist ("NO" in step S116), the flow goes to the step judging that the image in the initial detection target region is a non-face image (step S126).

On the other hand, when it is determined that the face image exists ("YES" in step S116), the flow proceeds to the next step (step S118).

The face image detecting apparatus 1 produces an image feature vector by means of the feature vector producing unit 30 referring to luminance of the image as the other image feature. The production method of the image feature vector will be discussed later (step S118).

Then, the face image detecting apparatus 1 inputs the image feature vector produced using the luminance of the image to the luminance SVM 50E, and judges whether or not the face image exists in the initial detection target region (step S120).

When it is determined that the face image does not exist ("NO" in step S122), the flow goes to the step judging that the image in the initial detection target region is a non-face image (step S126).

On the other hand, when it is determined that the face image exists ("YES" in step S122), the flow advances to a step judging that the image is a face image (step S124).

In both the step determining the non-face image (step S126) and the step determining the face image (step S124), the respective judgment results are displayed as outputs of classification results 95 to the user of the face image detecting apparatus 1 via the output device 72 every time the judgment is made or together with other results of judgment. Then, the flow advances to the next step (step S128).

The face image detecting apparatus 1 judges whether or not the detection has been completed throughout the detection target image by the detection of all the detection target regions having the designated sizes (step S128).

When it is determined that the detection has not been completed throughout the detection target image by the detection of all the detection target regions having the designated sizes ("NO" in step S128), the flow goes to a step for altering the size of the detection target region (step S130) and returns to the step which resizes the detection target region to the predetermined size by the resizing section 31 (step S104).

When it is determined that the detection has been completed throughout the detection target image by the detection of all the detection target regions having the designated sizes ("YES" in step S128), the process of the face image detection ends.

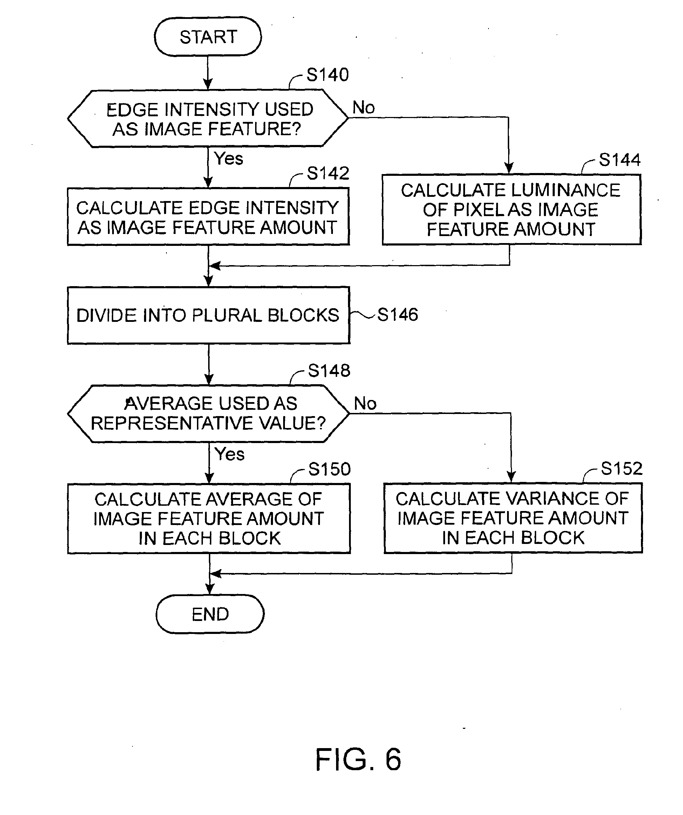

Next, the method for producing the image feature vector is explained. Fig. 6 is a flowchart showing how the image feature vector is produced. Upon the start of producing the image feature vector, a step judging whether or not the edge intensity is used as the image feature is initially executed (step S140). The decision which of the edge intensity and the luminance of the pixels is to be used as the image feature has been made before the process for producing the image feature vector starts.

When it is judged that the edge intensity is used as the image feature in accordance with the above decision ("YES" in step S140), the face image detecting apparatus 1 calculates the edge intensity of the image in the detection target region as the image feature amount by means of the edge intensity calculating section 36 (step S142). Then, the flow goes to the next step (step S146).

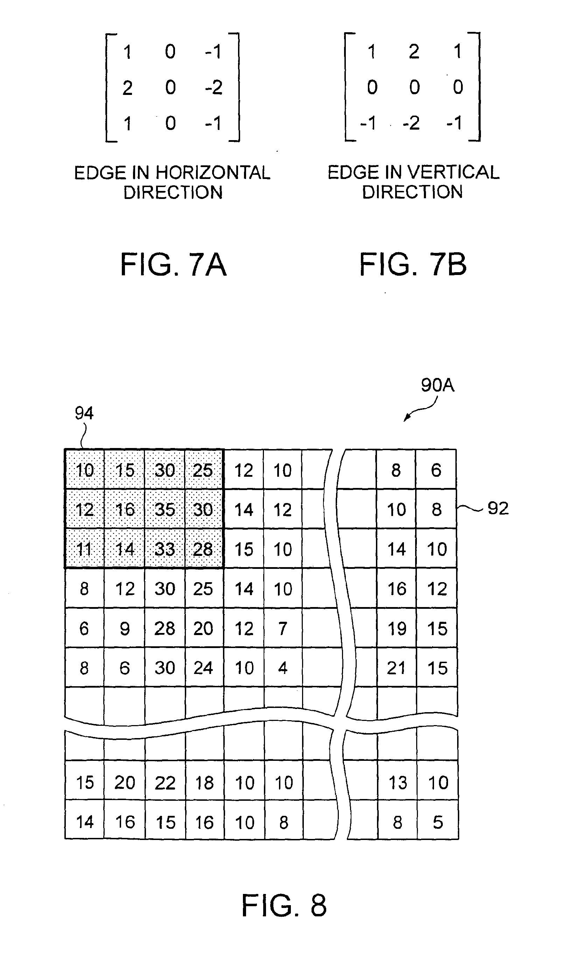

As the method of detecting the edge, "Sobel Operator" shown in Figs. 7A and 7B, which is one of difference-type edge detection operators, may be employed. In an operator (filter) shown in Fig. 7A, the edge in the horizontal direction is emphasized by controlling three pixel values located in the right and left rows in eight pixel values surrounding a pixel to be noted which is positioned in the second line and second row. In an operator shown in Fig. 7B, the edge in the vertical direction is emphasized by controlling three pixel values located in the upper and lower lines in eight pixel values surrounding a pixel to be noted which is positioned in the second line and second row. The horizontal and vertical edges are detected by emphasizing these edges in this way.

Subsequently, squares of the results obtained by the operators are added, and then the square root of the sum is calculated to obtain the edge intensity. It is known that the image feature vector can be detected with high accuracy by obtaining the edge intensity or the edge variance for each pixel.

When it is judged that the edge intensity is not used as the image feature in accordance with the above decision ("NO" in step S140), the face image detecting apparatus 1 calculates the luminance of the pixel in the detection target region as the image feature amount by means of the luminance calculating section 34 (step S144). Then, the flow advances to the next step (step S146).

The face image detecting apparatus 1 divides the detection target region into a plurality of blocks. Fig. 8 illustrates the region divided into blocks. In this figure, resized pixels 92 within a detection target region 90A are divided into blocks 94 each including $4 \times 3$ pixels (step S146).

Then, the face image detection apparatus 1 judges whether an average is used by the average/variance calculating section 38 (step S148). The decision which of an average and a variance is to be used as a representative value has been made before the process for producing the image feature vector starts. When it is judged that the average is used in accordance with the above decision ("YES" in step S148), the face image detecting apparatus 1 calculates the average of the image feature amount in each of the blocks (step S150). Then, the process for producing the image feature vector ends.

When it is judged that the average is not used in accordance with the above decision ("NO" in step S148), the face image detecting apparatus 1 calculates the variance of the image feature amount in each of the blocks (step S152). Then, the process for producing the image feature vector ends.

In this embodiment, the following advantages are offered.

(1) In the learning of the high-performance SVM 50B having the in-series pattern, the learning images used by the SVM 50E for the second process contain the non-face images 83 which have been erroneously recognized by the SVM 50F for the first process. This allows effective learning in the second process to be achieved, and thus highly reliable learning effects to be provided while preventing erroneous recognition of the non-face images 83 again which have been erroneously recognized.

(2) In addition to the above advantage, since the SVM 50E for the first process and the SVM 50F for the second process employ different image feature amounts, the face image can be securely classified.

(3) The classifying hyperplane is simplified by using different SVMs 50 specialized by the statistical natures of the image feature amounts in accordance with the natures thereof. Thus, the detection accuracy and the classification speed can be increased.

While the face image detecting apparatus in the embodiment according to the invention has been described with reference to the drawings, the invention is not limited to this embodiment but may be modified in the manner as described below, for example.

(1) In the embodiment, the detection target image is an image representing an entire human face. However, the target image to be classified may be a particular part of a human face or body, or an animal face other than a human face.

(2) While "Sobel Operator" is used to obtain the edge intensity in this embodiment, operators of "Roberts", "Prewitt" and the like may be employed.

## Claims

1. An object image detecting apparatus for determining whether or not an object image exists in a detection target image in which whether the object image is included is no t known, comprising:

an image reading unit for reading a predetermined region of the detection target image as a detection target region;
a feature vector producing unit for dividing an image included in the detection target region resized to a predetermined size into a plurality of blocks, calculating a representative value of an image feature amount indicating a predetermined image feature for each of the divided blocks, and producing a feature vector showing a characteristic of the image feature within the detection target region by referring to the representative value; and
at least two classifying units for determining whether or not the object image exists in the detection target region by different references based on the image feature indicated by the feature vector.

2. An object image detecting apparatus according to Claim 1, further including a classifying unit selecting section for selecting the classifying units in accordance with a statistical characteristic of the image feature indicated by the feature vector.

3. An object image detecting apparatus according to Claim 1, wherein the feature vector producing unit includes:

a resizing section for resizing the image within the detection target region to a predetermined size;
an image feature calculating section for calculating numerical values of the predetermined image feature of the image; and
an average/variance calculating section for dividing the detection target region into a plurality of blocks and calculating an average or a variance of the numerical values for each of the divided blocks.

4. An object image detecting apparatus according to Claim 1, wherein the image feature calculating section includes a luminance calculating section for calculating a luminance of each pixel constituting the image within the detection target region.

5. An object image detecting apparatus according to Claim 1, wherein the image feature calculating section includes an edge intensity calculating section for calculating edge intensity within the detection target region.

6. An obj ect image detecting apparatus according to claim 5, wherein the edge intensity is calculated using a Sobel operator provided for each pixel constituting the image within the detection target region.

7. An object image detecting apparatus according to Claim 1, the classifying units include support vector machines which have learned a plurality of sample object images and sample non-object images for learning in advance.

8. An object image detecting apparatus according to Claim 1, wherein:

the classifying units include a classifier for a first process and a classifier for a second process;
the classifier for the first process can perform classification at higher speed than that of the classifier for the second process; and
the classifier for the second process can perform classification with higher accuracy than that of the classifier for the first process.

9. An object image detecting apparatus according to Claim 8, wherein the classifier for the second process classifies the feature vectors which can be classified by the classifier for the first process.

**10.** An object image detecting apparatus according to Claim 8, wherein the classifier for the first process uses a linear Kernel function as a classifying function of the support vector machine.

**11.** An object image detecting apparatus according to Claim 8, wherein the classifier for the second process uses a non-linear Kernel function as a classifying function of the support vector machine.

**12.** An object image detecting apparatus according to Claim 1, wherein the classifiers include one classifier and the other classifier disposed downstream from the one classifier such that the respective classifiers can perform classification based on different image features.

**13.** An object image detecting apparatus according to Claim 12, wherein the other classifier includes a support vector machine which has learned the object images for learning and the non-object images having been erroneously classified by the one classifier.

**14.** An object image detecting apparatus according to Claim 1, wherein the object image is a face image.

**15.** A face image detecting program for determining whether or not a face image exists in a detection target image in which whether the face image is included or not is not known, under which face image detecting program a computer functioning as:

an image reading unit for reading a predetermined region of the detection target image as a detection target region;
a feature vector producing unit for dividing an image included in the detection target region resized to a predetermined size into a plurality of blocks, calculating a representative value of an image feature amount showing a predetermined image feature for each of the divided blocks, and producing a feature vector showing a characteristic of the image feature within the detection target region by referring to the representative value; and
at least two classifying units for determining whether or not the object image exists in the detection target region by different references based on the image feature indicated by the feature vector.

**16.** A face image detecting method for determining whether or not a face image exists in a detection target image in which whether the face image is included or not is not known, comprising:

designating a predetermined region within the detection target image as a detection target region;
resizing an image within the detection target region to a predetermined size;
dividing the detection target region into a plurality of blocks;
calculating a representative value of an image feature amount included in each of the blocks;
producing a feature vector showing a characteristic of the image within the detection target region from the representative value of the image feature amount; and
inputting the feature vector to at least two classifiers having different references for classification to determine whether or not the face image exists within the detection target region.

```
┌──────────────────────┐          ┌──────────────────────────┐
│   LEARNING IMAGE      │          │  DETECTION TARGET IMAGE  │─~90
└──────────────────────┘          └──────────────────────────┘
              ~80
```

IMAGE READING UNIT ~10

FEATURE VECTOR PRODUCING UNIT ~30

RESIZING SECTION ~31

IMAGE FEATURE CALCULATING SECTION ~32

LUMINANCE CALCULATING SECTION ~34

EDGE INTENSITIY CALCULATING SECTION ~36

AVERAGE/VARIANCE CALCULATING SECTION ~38

IMAGE FEATURE VECTOR

CLASSIFYING UNIT SELECTING SECTION ~40

LEARNING → CLASSIFYING UNIT (SVM) ← CLASSIFICATION

~50

1

LEARNING RESULT OUTPUT ~85     CLASSIFICATION RESULT OUTPUT ~95

# FIG. 1

FIG. 2

EP 1 775 683 A1

50

50A

## HIGH-SPEED SVM

50B

## HIGH-PERFORMANCE SVM

50C

50D

50E

50G

FOR FEATURE VECTOR
USING LUMINANCE

FOR FEATURE VECTOR
USING LUMINANCE

50F

50H

FOR FEATURE VECTOR
USING EDGE INTENSITY

FOR FEATURE VECTOR
USING EDGE INTENSITY

LEARN JAPANESE FACE

LEARN EUROPEAN AND
AMERICAN FACE

# FIG. 3

FIG. 4

EP 1 775 683 A1

FIG. 5

```
                    ┌─────────────┐
                    │    START    │
                    └──────┬──────┘
                           │        ┌─S140
                    ┌──────▼──────────┐   No
                  ◄─┤ EDGE INTENSITY USED ├───────────────┐
                    │  AS IMAGE FEATURE?  │               │
                    └──────┬──────────┘                   │
                           │ Yes                          │
                           │     ┌─S142              ┌─S144 │
              ┌────────────▼──────┐        ┌─────────▼──────────┐
              │ CALCULATE EDGE INTENSITY │ │ CALCULATE LUMINANCE │
              │  AS IMAGE FEATURE AMOUNT │ │   OF PIXEL AS IMAGE  │
              └────────────┬──────┘        │   FEATURE AMOUNT     │
                           │◄──────────────└─────────────────────┘
              ┌────────────▼──────┐
              │ DIVIDE INTO PLURAL BLOCKS │──S146
              └────────────┬──────┘
                           │     ┌─S148
                    ┌──────▼──────────┐   No
                    │   AVERAGE USED AS   ├───────────────┐
                    │ REPRESENTATIVE VALUE? │             │
                    └──────┬──────────┘                   │
                           │ Yes                          │
                           │     ┌─S150              ┌─S152 │
              ┌────────────▼──────┐        ┌─────────▼──────────┐
              │ CALCULATE AVERAGE OF │     │ CALCULATE VARIANCE OF │
              │ IMAGE FEATURE AMOUNT │     │ IMAGE FEATURE AMOUNT  │
              │    IN EACH BLOCK     │     │    IN EACH BLOCK      │
              └────────────┬──────┘        └─────────────────────┘
                           │◄──────────────────────────┘
                    ┌──────▼──────┐
                    │     END     │
                    └─────────────┘
```

# FIG. 6

$$\begin{bmatrix} 1 & 0 & -1 \\ 2 & 0 & -2 \\ 1 & 0 & -1 \end{bmatrix}$$

EDGE IN HORIZONTAL
DIRECTION

## FIG. 7A

$$\begin{bmatrix} 1 & 2 & 1 \\ 0 & 0 & 0 \\ -1 & -2 & -1 \end{bmatrix}$$

EDGE IN VERTICAL
DIRECTION

## FIG. 7B

90A

94

| 10 | 15 | 30 | 25 | 12 | 10 |  |  | 8 | 6 |
|----|----|----|----|----|----|--|--|----|----|
| 12 | 16 | 35 | 30 | 14 | 12 |  |  | 10 | 8 | ~92
| 11 | 14 | 33 | 28 | 15 | 10 |  |  | 14 | 10 |
| 8 | 12 | 30 | 25 | 14 | 10 |  |  | 16 | 12 |
| 6 | 9 | 28 | 20 | 12 | 7 |  |  | 19 | 15 |
| 8 | 6 | 30 | 24 | 10 | 4 |  |  | 21 | 15 |
|  |  |  |  |  |  |  |  |  |  |
|  |  |  |  |  |  |  |  |  |  |
| 15 | 20 | 22 | 18 | 10 | 10 |  |  | 13 | 10 |
| 14 | 16 | 15 | 16 | 10 | 8 |  |  | 8 | 5 |

## FIG. 8

## INTERNATIONAL SEARCH REPORT

| | International application No. |
|---|---|
| | PCT/JP2005/014271 |

**A. CLASSIFICATION OF SUBJECT MATTER**
Int.Cl⁷ G06T7/00, 1/00

According to International Patent Classification (IPC) or to both national classification and IPC

**B. FIELDS SEARCHED**

Minimum documentation searched (classification system followed by classification symbols)
Int.Cl⁷ G06T7/00, 1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-271933 A (Sony Corp.),<br>26 September, 2003 (26.09.03),<br>Par. Nos. [0005] to [0010], [0049] to [0137],<br>[0212]<br>(Family: none) | 1-16 |
| Y | JP 05-30355 A (Fuji Photo Film Co., Ltd.),<br>05 February, 1993 (05.02.93),<br>Claim 1<br>& US 5278755 A1 | 1-16 |
| Y | JP 2001-216515 A (Matsushita Electric<br>Industrial Co., Ltd.),<br>10 August, 2001 (10.08.01),<br>Claims 2, 5; Par. No. [0051]<br>& US 2001-36298 A1 | 4-14 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 30 August, 2005 (30.08.05) | 13 September, 2005 (13.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/014271 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 05-205057 A  (Mitsubishi Kasei Corp.),<br>13 August, 1993 (13.08.93),<br>Claim 1<br>(Family: none) | 8-14 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003271933 A

**Non-patent literature cited in the description**

- *Patan Ninshiki To Gakushu No Tokeigaku,* 107-118